(19) Europäisches Patentamt
European Patent Office
Office européen des brevets

(11) Veröffentlichungsnummer: **0 340 525 B1**

# EUROPÄISCHE PATENTSCHRIFT

(12)

(45) Veröffentlichungstag der Patentschrift:
**13.11.91 Patentblatt 91/46**

(51) Int. Cl.⁵: **F16C 13/00, F16C 32/06**

(21) Anmeldenummer: **89106931.2**

(22) Anmeldetag: **18.04.89**

(54) **Stützelement für eine hydrostatisch innenabgestützte Walze.**

(30) Priorität: **06.05.88 DE 3815462**

(43) Veröffentlichungstag der Anmeldung:
**08.11.89 Patentblatt 89/45**

(45) Bekanntmachung des Hinweises auf die
Patenterteilung:
**13.11.91 Patentblatt 91/46**

(84) Benannte Vertragsstaaten:
**CH FR GB IT LI SE**

(56) Entgegenhaltungen:
**CH-A- 601 687**
**DE-A- 2 145 674**

(73) Patentinhaber: **Eduard Küsters**
**Maschinenfabrik GmbH & Co. KG**
**Gladbacher Strasse 457**
**W-4150 Krefeld 1 (DE)**

(72) Erfinder: **Schrörs, Günter**
**Corneliusstrasse 29**
**W-4154 Tönisvorst 1 (DE)**

(74) Vertreter: **Patentanwälte Dipl.-Ing. Walter**
**Kuborn Dipl.-Phys. Dr. Peter Palgen**
**Mulvanystrasse 2**
**W-4000 Düsseldorf (DE)**

## Beschreibung

Die Erfindung bezieht sich auf ein Stützelement der dem Oberbegriff des Anspruchs 1 entsprechenden Art.

Derartige Stützelemente sind aus der DE-A-2230139 bekannt. Sie schmiegen sich mit ihrer zylindrischen Anlagefläche dem Innenumfang der Hohlwalze an, wobei jedoch die radial von innen gegen den Innenumfang der Hohlwalze wirkenden Anpreßkräfte nicht unter metallischer Reibung, sondern über einen tragfähigen Flüssigkeitsfilm übertragen werden, der durch aus den Lagertaschen über die Oberseite der Stege ständig abströmende Druckflüssigkeit gebildet ist.

Bei normaler Festkörperreibung sind die auftretenden Reibungskräfte und damit auch die in Wärme umgesetzte Reibungsarbeit in erster Näherung von der Fläche, auf der die Anpreßkräfte übertragen werden, unabhängig.

Bei den Stützelementen hingegen kommt es in dem in der Anlagefläche gebildeten Spalt zwischen dem Innenumfang der Hohlwalze und der Oberseite der Stege zu einer Flüssigkeitsreibung durch die innere Reibung der in dem Spalt unter hohem Druck und unter hoher Scherbeanspruchung stehenden Flüssigkeit. Diese Reibung ist von der Erstrekkung des Spaltes, d.h. von der Erstreckung der Stege in Umfangsrichtung abhängig. Je größer diese Erstreckung ist, auf einer desto größeren Länge erfährt die Flüssigkeit die innere Reibung und desto mehr auf diese Weise erzeugte Reibungswärme fällt an. Daß zwischen der Größe der Stege und der durch die Flüssigkeitsreibung bedingten Wärmeentwicklung ein Zusammenhang besteht, ist für sich genommen aus der DE-A-3611858 bekannt.

Bei geringen Umfangsgeschwindigkeiten der Hohlwalze gegenüber den Stützelementen macht sich dies noch nicht wesentlich bemerkbar. Steigt die Umfangsgeschwindigkeit jedoch an, so entsteht an jedem Stützelement eine recht erhebliche Reibungsleistung, die bei den üblichen Abmessungen der Stützelemente mit einem Durchmesser der Anlagefläche von etwa 100 bis 200 mm je nach Umfangsgeschwindigkeit der Hohlwalze in der Größenordnung von 1 kW (Kilowatt) und darüber liegen kann. Wenn Reibleistungen dieser Gesamtgrößenordnung über die Länge der Stützelemente ungleichmäßig anfallen, weil die Erstreckung der Stege in Umfangsrichtung unterschiedlich ist, macht sich dies in merklichen Temperaturunterschieden am Außenumfang der Hohlwalze bemerkbar, die bei bestimmten Behandlungen von Papierbahnen, Vliesen oder dergleichen schon schädliche Folgen haben können.

Der Erfindung liegt die Aufgabe zugrunde, ein gattungsgemäßes Stützelement dahingehend auszubilden, daß der durch die Flüssigkeitsreibung bedingte Wärmeanfall über die Länge des Stützelements, in Achsrichtung der Hohlwalze gesehen, gleichmäßig ist.

Diese Aufgabe wird durch die in Anspruch 1 wiedergegebene Erfindung gelöst.

Durch eine solche Gestaltung der die Lagertaschen umschließenden und gegen den Innenumfang der Hohlwalze im wesentlichen abdichtenden Stege ist erreicht, daß die Flüssigkeitsreibung in Umfangsrichtung auf der ganzen Länge des Stützelements, in Längsrichtung der Hohlwalze gesehen, konstant ist und somit auch die Flüssigkeitsreibungswärme über die Länge des einzelnen Stützelements gleichmäßig anfällt und nicht zu Temperaturunterschieden führt.

Es versteht sich, daß bei entsprechenden Ansprüchen an die Gleichmäßigkeit der Temperaturverteilung über die ganze Walze dafür gesorgt sein sollte, daß die einzelnen Stützelemente möglichst dicht aufeinanderfolgen oder die Stützelemente in mehreren, in Umfangsrichtung gegeneinander versetzten Reihen derart angeordnet sind, daß eine gleichmäßige Überdeckung der ganzen Walzenlänge gegeben ist.

Die Gestaltung der Stützelemente an den in Achsrichtung der Hohlwalze gelegenen Enden erfolgt zweckmäßig in der in Anspruch 2 wiedergegebenen Weise.

In der Zeichnung sind Ausführungsbeispiele der Erfindung dargestellt.

Fig. 1 zeigt schematisch einen Längsschnitt durch eine hydraulisch innenabgestützte Walze ;
Fig. 2 und 3 zeigen Längssschnitte durch ein einzelnes Stützelement in vergrößertem Maßstab ;
Fig. 4 zeigt eine Ansicht gemäß Fig. 2 von oben auf ein herkömmliches Stützelement ;
Fig. 5 zeigt ein Diagramm der Gesamterstreckung der Stege in Umfangsrichtung ;
Fig. 6 und 7 zeigen entsprechende Darstellungen einer anderen bekannten Ausführungsform ;
Fig. 8 zeigt eine Ansicht auf die Anlagefläche eines erfindungsgemäßen Stützelements ;
Fig. 9 zeigt ein Diagramm der Gesamterstreckung der Stege über die Länge des Stützelements ;
Fig. 10, 11 und 12 zeigen Ansichten der Anlagefläche weiterer Ausführungsformen von Stützelementen.

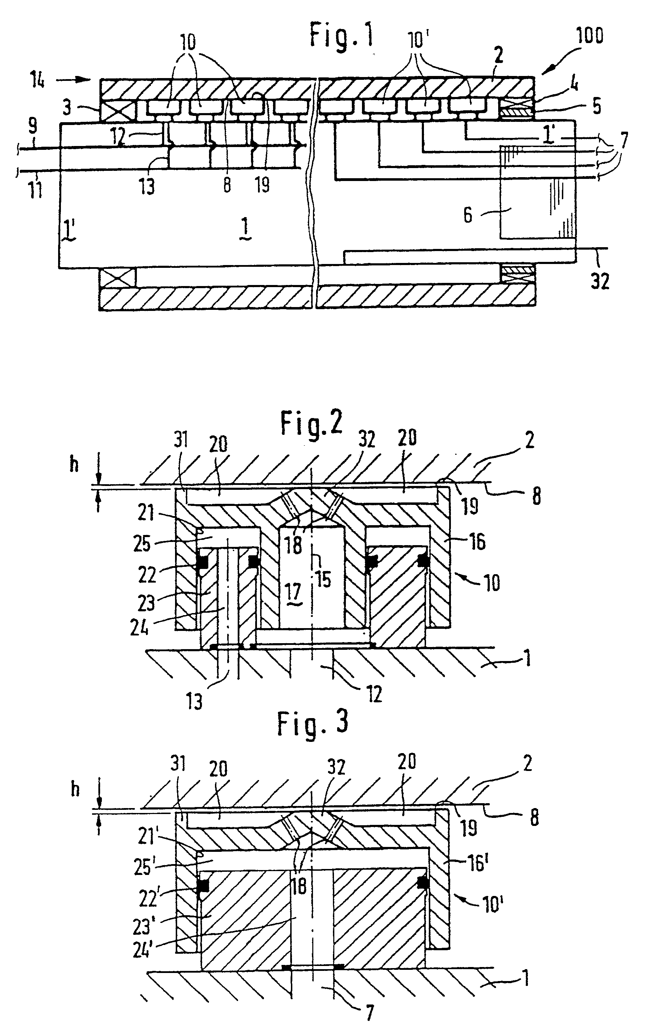

Die in Fig. 1 als Ganzes mit 100 bezeichnete Walze umfaßt ein undrehbares Querhaupt 1, welches eine umlaufende Hohlwalze 2 der Länge nach mit allseitigem Abstand durchgreift. Die aus der Hohlwalze 2 hervorstehenden Enden 1' des Querhaupts 1 sind in einer nicht wiedergegebenen Weise in einem Walzenständer oder den Schwingen eines Kalanders oder in ähnlicher Weise gelagert.

Bei der in der linken Hälfte der Fig. 1 wiedergegebenen Ausführungsform ist die Hohlwalze 2 über ein Wälzlager 3 auf dem Querhaupt 1 gelagert. Am rechten Ende der Hohlwalze 2 ist eine Ausführungsvariante dargestellt, bei der die Hohlwalze 2 über ein Lager 4 auf einem Ring 5 gelagert ist, der sich gegenüber dem Querhaupt 1 von oben nach unten etwas verlagern, jedoch nicht drehen kann. Es ist an dem Querhaupt 1 eine Geradführung in Gestalt zweier einander gegenüberliegender Abflachungen 6 des Querhaupts 1 vorgesehen, an denen der Führungsring 5 mit entsprechenden nicht wiedergegebenen Führungsflächen gleiten kann. Das Lager 3 vermag Kräfte in Wirkrichtung der Walze 100 von der Hohlwalze 2 auf das Querhaupt 1 zu übertragen, das Lager 4 hat nur Führungsaufgaben senkrecht zur Wirkebene. In der Wirkebene können dadurch wegen der Verlagerbarkeit der Führungsringes 5 keine Kräfte von der Hohlwalze 2 auf das Querhaupt 1 weitergegeben werden. Es versteht sich, daß bei einer praktischen Walze die Ausbildung an den beiden Enden der Hohlwalze gleich ist. Die Darstellung in Fig. 1 dient nur der Erläuterung der Walzentypen, für die die Erfindung in Betracht kommt.

In dem Ausführungsbeispiel der Fig. 1 sind acht Stützelemente 10, 10' sichtbar, die über die Länge der Hohlwalze 2 in gleichmäßigen Abständen verteilt und am Querhaupt 1 abgestützt sind und mit ihrer Anlagefläche 7 gegen den Innenumfang 8 der Hohlwalze 2 anliegen. Es können sowohl weniger Stützelemente vorhanden sein als auch mehr, wenn die Walze 100 länger ist. Die Stützelemente 10 der linken Hälfte der Fig. 1 werden über gemeinsame Zuleitungen 9, 11 und jeweils zu den einzelnen Stützelementen 10 abzweigende Zweigleitungen 12, 13 mit zwei getrennten Druckflüssigkeiten versorgt, die einerseits die Stützelemente 10 gegen den Innenumfang 8 der Hohlwalze 2 anpressen und andererseits die Lagerung der Stützelemente 10 an diesem Innenumfang 8 übernehmen. Die Stützelemente 10' haben jeweils nur eine Zuleitung 7, wobei aber anders als bei den Stützelementen 10 jedem einzelnen Stützelement 10' eine eigene Zuleitung 7 zugeordnet ist. Die Ausbildung der Stützelemente 10, 10' im einzelnen wird anhand der Fig. 2 und 3 erläutert.

In dem in Fig. 1 wiedergegebenen Ausführungsbeispiel ist der Walzspalt 14 oben gelegen, d.h. eine nicht dargestellte Gegenwalze liegt von oben gegen den arbeitenden Außenumfang der Hohlwalze 2 an. Dadurch ergibt sich für die Hohlwalze 2 eine Streckenlast, die im inneren Bereich ihrer Längenerstreckung von den Stützelementen 10, 10' abgefangen und auf das Querhaupt 1 weitergeleitet wird, welches sich unter dieser Streckenlast durchbiegt, wodurch die Hohlwalze 2 von belastungsbedingten Formänderungen freigehalten werden kann.

In Fig. 2 ist ein einzelnes Stützelement 10 dargestellt. Es besitzt eine Achse 15, die zur Wirkrichtung parallel ist und in der eine zentrale nicht bis zur Oberseite des Stützelements 10 durchgehende Bohrung 17 angebracht ist, von deren in Fig. 2 oberem Ende in dem Ausführungsbeispiel vier um die Achse 15 gleichmäßig verteilte Drosselkanäle 18 ausgehen. Das Gehäuse 16 des Stützelements 10 hat einen etwa kreisförmigen Grundriß und ist an seiner dem Innenumfang 8 der Hohlwalze 2 zugewandten, die Stützfläche bildenden Anlagefläche 19 dem Innenumfang 8 entsprechend gewölbt, d.h. zylindrisch mit einem dem Innenumfang 8 entsprechenden Durchmesser und zur Achse 15 senkrechter Achse.

In der Anlagefläche 19 sind vier voneinander getrennte, ringsum durch Stege 31, 32 berandete flache Lagertaschen 20 ausgearbeitet, die über je eine der Drosselbohrungen 18 mit der Bohrung 17 in Verbindung stehen. Das Vorhandensein von vier Lagertaschen 20 dient der Stabilisierung des Stützelements 10 im Sinne der Anlage an dem Innenumfang 8 unter gleichmäßiger Spaltbreite h (Fig. 2).

Gemäß Fig. 2 unterhalb der Lagertaschen 20 ist in dem Gehäuse 16 ein zur Achse 15 konzentrischer Ringzylinder 21 ausgebildet, in welchen ein über Dichtungen 22 abgedichteter, auf der Oberseite des Querhauptes 1 dicht befestigter Ringkolben 23 eingreift. Das Gehäuse 16 des Stützelements 10 kann sich also auf dem Ringkolben 23 parallel zur Achse 15 verlagern.

Der Ringkolben 23 besitzt eine achsparallele Bohrung 24, die mit einer Zweigleitung 13 in Verbindung steht, so daß die oberhalb des Ringkolbens 23 gebildete, bis auf die Bohrung 24 geschlossene Druckkammer 25 an die in Fig. 1 wiedergegebene Zuleitung 11 angeschlossen ist. Die gegen das Innere des Ringkolbens 23 offene Bohrung 17 hingegen steht mit der dort mündenden Zweigleitung 12 und auf diese Weise mit der in Fig. 1 dargestellten Zuleitung 9 in Verbindung.

Der Betrieb des Stützelements 10 kann beispielsweise so erfolgen, daß in der Kammer 25 ein steuerbarer konstanter Druck aufrechterhalten wird, der das Stützelement 10 gegen den Innenumfang 8 der Hohlwalze 2 anpreßt und daß den Lagertaschen 20 ein mengengeregelter Volumenstrom an Druckflüssigkeit zugeführt wird, dessen Druck in den Lagertaschen 20 sich selbsttätig einstellt. Die zugeführte Druckflüssigkeitsmenge strömt durch den Spalt h nach außen ab, so daß auf der dem Innenumfang 8 zugewandten Oberseite der Stege 31, 32 ein tragfähiger Flüssigkeitsfilm gebildet ist, auf welchem das Stützelement 10 am Innenumfang 8 der Hohlwalze 2 abgestützt ist.

Im Betrieb gelangt Druckflüssigkeit aus der Leitung 9 über die Zweigleitungen 12 in die Bohrungen 17 der einzelnen Stützelemente 10 und von dort über die Drosselkanäle 18 in die Lagertaschen 20. Da diese von der Anlagefläche 19 bzw. den sie bildenden Stegen 31, 32 ringsum berandet sind und im wesentlichen dicht an der Innenumfangsfläche 8 der Hohlwalze anliegen, baut sich in den Lagertaschen 20 ein Druck auf, der hydrostatisch gegen den Innenumfang 8 der Hohlwalze 2 wirkt. Beim Ansteigen des Druckes wird der Innenumfang 8 von der Anlagefläche 19 etwas abgehoben, wodurch Druckflüssigkeit aus den einzelnen Lagertaschen durch den Spalt h nach außen abströmt. Wegen der Drosselbohrungen 18 fällt dann der Druck in den Lagertaschen 20 sofort ab, wodurch sich der Spalt h zwischen der Anlagefläche 19 und der Innenumfangsfläche 8 wieder verkleinert. Es stellt sich auf diese Weise ein Gleichgewichtszustand mit einer bestimmten Größe des Spaltes h ein.

Bei den Stützelementen 10 wird dafür gesorgt, daß der Druck in der Druckkammer 25 einerseits und die durchgesetzte Druckflüssigkeitsmenge in den Lagertaschen 20 andererseits bei allen Stützelementen 10 gleich sind.

Bei den Stützelementen 10' der Fig. 3 ist statt des Ringkolbens 23 ein zylindrischer Kolben 23' mit einer zentralen an die Zuleitung 7 angeschlossenen Durchgangsbohrung 24' vorgesehen. Der Kolben 23' taucht in die zylindrische Ausnehmung 21' des Gehäuses 16' des Stützelements 10' ein und ist darin mittels einer Umfangsdichtung 22' abgedichtet. Die über dem Kolben 23' gebildete Druckkammer 25', die über die Zuleitung 7 mit Druckflüssigkeit versorgt wird, steht über die Drosselbohrungen 18 mit den Lagertaschen 20 in Verbindung. Während also bei dem Stützelement 10 die Druckflüssigkeit in der Druckkammer 25 von der in den Lagertaschen 20 getrennt war, ist es bei dem Stützelement 10' ein und dieselbe Druckflüssigkeit, die zunächst in die Druckkammer 25' eintritt und dann in die Lagertaschen 20 übertritt.

Die Erfindung ist für diese und auch noch andere Arten von Stützelementen geeignet, soweit sie eine an Stegen 31, 32 gebildete Anlagefläche 19 aufweisen, die mit dem Innenumfang 8 der Hohlwalze 2 einen Spalt h bildet.

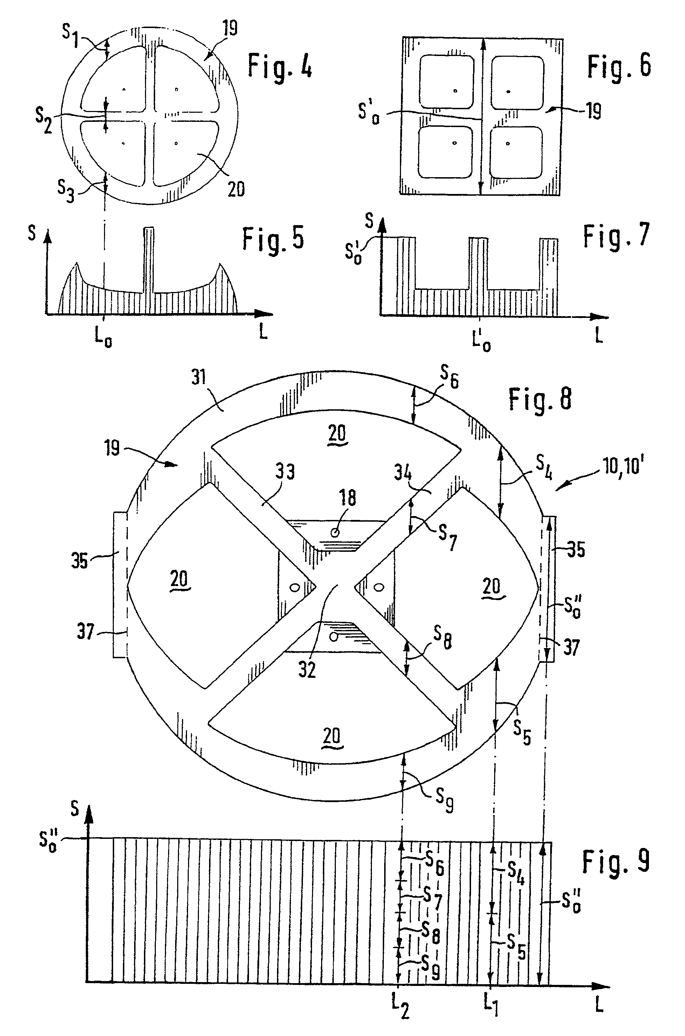

In Fig. 4 ist eine Ansicht entsprechend den Fig. 2 bzw. 3 von oben auf ein Stützelement bekannter Art als Abwicklung in die Ebene wiedergegeben.

Fig. 5 zeigt ein Diagramm, in welchem über der Länge L des Stützelementes in Achsrichtung der Hohlwalze 2 gesehen die Gesamterstreckung S der Stege der Anlagefläche 19 aufgetragen ist, und zwar in halbem Maßstab, während die Länge L im tatsächlichen Maßstab wiedergegeben ist.

An der Stelle $L_0$ setzt sich die Gesamterstreckung $S_0$ in Umfangsrichtung der Hohlwalze 2 aus den drei Einzelerstreckungen $S_1$, $S_2$ und $S_3$ zusammen. Die Summe $S_0$ ist in Fig. 5 in halbem Maßstab aufgetragen. Entsprechendes gilt für alle anderen Punkte der Länge des Stützelements. Allgemein gilt

$$S = \Sigma S_i,$$

worin i die Anzahl der an einer bestimmten Stelle vorliegenden Stege ist.

Aus Fig. 5 ist ersichtlich, daß die Gesamterstreckung S der Anlagefläche 19 und damit die Gesamtlänge des Spaltes h über die Länge des Stützelementes in Achsrichtung der Hohlwalze 2 sehr stark schwankt.

Eine ähnliche leicht überschaubare Darstellung ergibt sich anhand der Fig. 6 und 7, wobei das Stützelement einen quadratischen Umriß aufweist und sich auch über die Länge L sehr starke Unterschiede in der Gesamterstreckung S ergeben.

Bei der Ausführungsform der Fig. 8 hingegen sind die Stege so gestaltet, daß ihre Gesamterstreckung S in Umfangsrichtung an jeder Stelle der Länge des Stützelements 10, 10' die gleiche ist. In dem S, L-Diagramm der Fig. 9 ist S also konstant. An jeder Stelle längs der Achse der Hohlwalze 2 hat der Spalt h in Umfangsrichtung gesehen die gleiche Gesamterstreckung $S_0^*$.

Die Stützelemente 10, 10' haben gemäß Fig. 8 einen etwa kreisförmigen Randsteg 31, der diametral von zwei unter 90° stehenden Stegen 33, 34 gekreuzt wird, so daß sich vier Lagertaschen 20 ergeben, die über die Drosselkanäle 18 gespeist werden. Der sich an der Kreuzungsstelle der Stege 33, 34 ergebende mittlere Stegbereich 32 ist auch in den Fig. 2 und 3 erkennbar.

Die in Achsrichtung der Hohlwalze 2, d.h. gemäß Fig. 8 rechts und links gelegenen Lagertaschen 20 grenzen an nach innen durch eine gedachte Linie 37 begrenzte rechteckige Stegteile 35, deren längere Seiten in Umfangsrichtung gelegen sind. Die Länge dieser längeren Seite ist gleich der Gesamterstreckung $S_0^*$, die überall konstant ist und sich an der Stelle $L_1$ aus den beiden Strecken $S_4$ und $S_5$, an der Stelle $L_2$ aus den vier Strecken $S_6$, $S_7$, $S_8$ und $S_9$ zusammensetzt, wie es aus den Fig. 8 und 9 zu entnehmen ist.

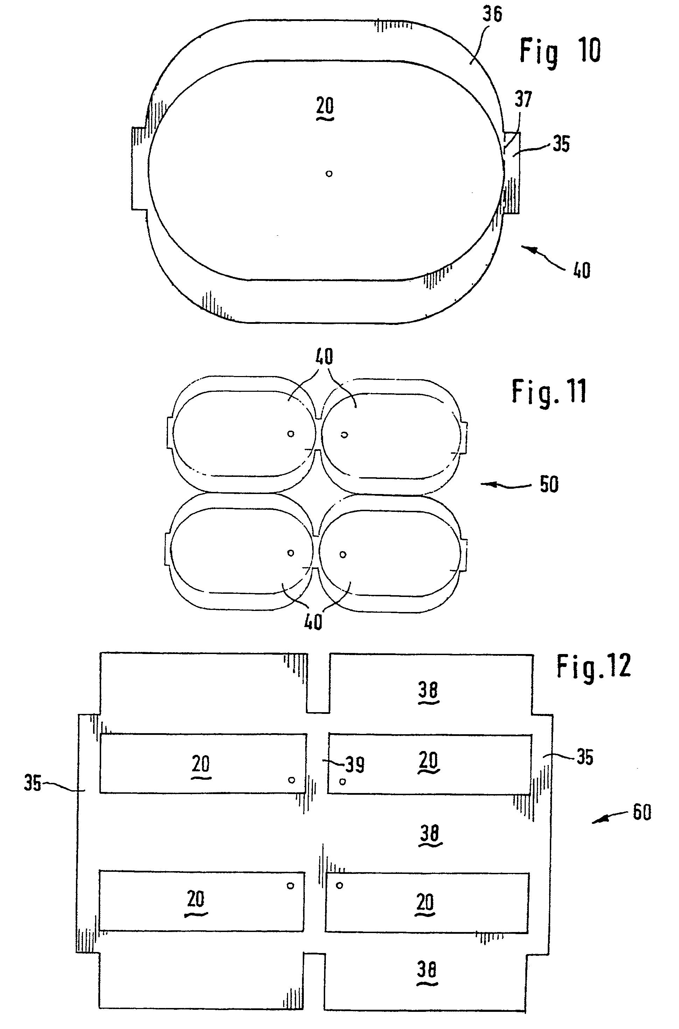

In Fig. 10 ist eine weitere Ausführungsform in Gestalt eines Stützelements 40 dargestellt, welches nur eine einzige Lagertasche 20 ovalen Umrisses umfaßt, die rundum von einem Randsteg 36 begrenzt ist. Auch hier ist an den in Achsrichtung gelegenen Enden ein rechteckiger Stegteil 35 vorgesehen, dessen beide längere Seiten sich in Umfangsrichtung erstrecken und der nach innen durch eine gedachte Linie 37 begrenzt ist, die in Höhe des äußersten Endes der Lagertasche 20 verläuft.

Es können auch vier Stützelemente 40 zu einem neuen Stützelement 50 in der aus Fig. 11 ersichtlichen Weise kombiniert werden, um zu einer hinsichtlich des Spaltes h stabilisierten Ausbildung zu gelangen.

Bei dem Stützelement 60 der Fig. 12 sind vier rechteckige Lagertaschen im Rechteck angeordnet und durch Stege 38, die sich parallel zu den längeren Seiten der Rechtecke erstrecken, sowie 39, die sich zwischen den Lagertaschen 20 parallel zu den kürzeren Seiten erstrecken, ringsum umgeben. An den in Achsrichtung gelegenen Begrenzungen sind wieder Rechtecke 35 vorgesehen, deren Erstreckung in Umfangsrichtung der Gesamterstreckung entspricht.

Wird die Gesamterstreckung S bei den Stützelementen 40, 50, 60 über der Längserstreckung L des betreffenden Stützelements aufgetragen, so ergeben sich horizontale Linien entsprechend Fig. 9, wobei der dieser Linie zugeordnete Wert $S'_0$ der Gesamterstreckung konstruktionsbedingt unterschiedlich sein kann.

## Patentansprüche

1. Stützelement (10, 10', 40, 50, 60) für eine hydrostatisch innenabgestützte Walze (100)

mit einer umlaufenden, den arbeitenden Walzenumfang bildenden Hohlwalze (2)

und mit einem die Hohlwalze der Länge nach durchgreifenden, ringsum Abstand vom Innenumfang der Hohlwalze (2) belassenden, undrehbaren Querhaupt (1),

wobei das Stützelement (10, 10', 40, 50, 60) eines von mehreren in einer oder mehreren Reihen längs des Querhauptes an diesem abgestützten Stützelementen ist und mittels in einer Druckkammer befindlicher Druckflüssigkeit gegen den Innenumfang der Hohlwalze (2) anpreßbar ist und wobei das Stützelement in seiner zylindrisch gekrümmten, im Radius dem Radius des Innenumfangs der Hohlwalze entsprechenden Anlagefläche (19) hydrostatische Lagertaschen (20) aufweist, die mit den Anpreßdruck auf den Innenumfang der Hohlwalze übertragender Druckflüssigkeit füllbar und ringsum durch Stege (31-39) berandet sind, deren Oberseiten in der Anlagefläche (19) liegen, dadurch gekennzeichnet,

daß die in Walzenumfangsrichtung gemessene Gesamterstreckung ($S''_0$) der Stege (31, 33, 34, 35, 36, 38, 39) des Stützelements (10, 40, 50, 60) über seine Erstreckung in Achsrichtung der Hohlwalze (2) konstant ist.

2. Stützelement nach Anspruch 1, dadurch gekennzeichnet, daß die Begrenzung des Stützelements (10, 40, 50, 60) in Achsrichtung der Hohlwalze (2) durch einen parallelogrammförmigen bzw. rechteckigen Stegteil (35) gebildet ist, von welchem zwei parallele Seiten in Umfangsrichtung und die innere (37) dieser Seiten in Höhe der axialen Begrenzung der benachbarten Lagertasche (20) gelegen sind.

## Claims

1. A supporting element (10, 10', 40, 50, 60) for a hydrostatically internally supported roller (100) comprising a rotating shell (2) forming the working roller periphery

and comprising a non-rotatable beam (1) extending longitudinally through the shell and leaving a space all round from the inner periphery of the shell (2),

the support element (10, 10', 40, 50, 60) being one of a plurality of support elements supported against the beam in one or more rows along the latter and being pressable against the inner periphery of the shell (2) by means of a pressure fluid in a pressure chamber and the support element having hydrostatic bearing pockets (20) in its cylindrically curved abutment surface (19), the radius of which corresponds to the radius of the inner periphery of the shell, said bearing pockets being fillable with pressure fluid, which transmits the biasing pressure to the inner periphery of the shell, and being flanked all round by webs (31-39) the tops of which are situated in the abutment surface (19), characterised in that

the total extension ($S''_0$) of the webs (31, 33 34 35, 36, 38, 39) of the support element (10, 40, 50, 60) as measured in the peripheral direction of the roller is constant over its extension in the axial direction of the shell (2).

2. A support element according to claim 1, characterised in that the boundary of the support element (10, 40, 50, 60) in the axial direction of the shell (2) is formed by a parallelogram-shaped or rectangular web part (35) of which two parallel sides are situated in the peripheral direction and the inner one (37) of said sides is situated at the level of the axial boundary of the adjacent bearing pocket (20).

## Revendications

1. Elément d'appui (10, 10', 40, 50, 60) pour un cylindre (100) hydrostatiquement supporté par l'intérieur, comprenant

un cylindre creux (2) tournant, formant la périphérie de cylindre active et

une traverse (1) immobile délimitant un jeu vis-à-vis de la périphérie interne, traversant toute la longueur du cylindre creux (2),

l'élément d'appui (10, 10', 40, 50, 60) étant constitué de plusieurs éléments d'appui en une ou plusieurs rangées disposées le long de la traverse et qu'on peut appliquer sur la périphérie interne du cylindre creux (2) au moyen de liquide sous pression se trouvant dans une chambre de pression, l'élément d'appui présentant des poches de palier (20) hydrostatiques à face de contact (19) bombées dont le rayon correspond au rayon de la périphérie interne du cylindre creux, qui reposent, sous l'effet de la pression, sur la périphérie interne du cylindre creux grâce au remplissage de liquide sous pression, et qui sont délimitées annulairement par des nervures (31-39) dont les faces supérieures reposent au niveau des faces de contact (19), élément d'appui caractérisé en ce que l'étendue globale mesurée dans le sens périphérique du cylindre ($S''_0$) des nervures (31, 33, 34, 35, 36, 38, 39) de l'élément d'appui (10, 40, 50, 60) est constante sur son étendue dans le sens axial du cylindre creux (2).

2. Elément d'appui selon la revendication 1, caractérisé en ce que la délimitation de l'élément d'appui (10, 40, 50, 60) dans le sens de l'axe de cylindre creux (2) est formée par une pièce de nervure (35) en forme de parallélogramme ou de rectangle, dont deux côtés parallèles sont dans le sens périphérique et les intérieurs (37) de ces côtés sont placés au niveau de la délimitation axiale des poches voisines de palier (20).

Fig.1

Fig.2

Fig. 3

Fig. 4

$S_1$
$S_2$
$S_3$
19
20

Fig. 5

S

$L_0$
L

Fig. 6

$S'_0$
19

Fig. 7

S

$S'_0$

$L'_0$
L

Fig. 8

31
19
$S_6$
$S_4$
10,10'
20
33
34
18
$S_7$
35
35
20
20
$S''_0$
37
37
32
$S_8$
20
$S_5$
$S_9$

Fig. 9

S

$S''_0$

$S_6$
$S_7$
$S_8$
$S_9$
$S_4$
$S_5$
$S''_0$

$L_2$
$L_1$
L

8

Fig 10

Fig. 11

Fig.12